# EUROPEAN PATENT APPLICATION

(11) **EP 4 557 843 A1**
(43) Date of publication of application: **21.05.2025**
(21) Application number: 24214072.1
(22) Date of filing: 20.11.2024
(51) Int. Cl.: H04W 52/42, H04W 52/14

(54) **SYSTEM AND METHOD FOR POWER DISTRIBUTION IN MULTIPLE ANTENNA SYSTEM**

(30) Priority: 20.11.2023 IN 202321078816; 18.11.2024 US 202418950292
(71) Applicant: Mavenir Systems, Inc., Richardson, TX 75081 (US)
(72) Inventor: Chandran, Ramesh, 560102 Bangalore (IN); Lourdu Raja, Charles Santhosam, 560048 Bangalore (IN); Vijayan, Logeshwaran, 560066 Bengaluru (IN)
(74) Representative: dompatent von Kreisler Selting Werner - Partnerschaft von Patent- und Rechtsanwälten mbB

(57) **Abstract**

Systems and methods for mapping Resource Blocks over antennas for Physical Downlink Control Channel (PDCCH) and Physical Downlink Shared Channel (PDSCH) transmission.

## Description

### DESCRIPTION OF THE DISCLOSURE

### a. Field of the Disclosure

The present disclosure relates to systems and methods for radio access networks. The present disclosure relates to the design of operation, administration and management of various network elements of 4G, 5G, and further ongoing generational mobile networks, including Physical Downlink Control Channel (PDCCH) and Physical Downlink Shared Channel (PDSCH) transmission in a Fifth Generation (5G) New Radio (NR) system.

### b. Description of the Related Art

Wireless communication systems are widely deployed to provide variety of communication services such as for voice, data transmission and so on. The need for an increase in data rate transmission is growing rapidly. One of the ways this is accomplished is by adopting multiple antennas in wireless systems. These multiple antennas are used for sending and receiving data signals over radio channels.

In addition to achieving higher data rates, multiple antenna transmission techniques can provide robust transmission over multipath fading channels. The number of antennas in a wireless system depends on the implementation complexity, and the distance between the antenna elements depends on the operating frequency.

Physical Downlink Control Channel (PDCCH) transmission in a 5G NR system is used to carry Downlink Control Information (DCI) for transmitting Physical Downlink Shared Channel (PDSCH), Physical Uplink Shared Channel (PUSCH), Medium Access Control (MAC) level information for a single or group of UEs. PDCCH transmission in 5G NR is designed in the form of Control Resource Set (CORESET) based transmission. CORESET defines the control region in a slot in terms of OFDM symbols and Resource Block (RBs). Control Channel Elements (CCEs) within a CORESET are allocated to UEs in an interleaved or non-interleaved form.

Physical Resource block Group (PRG) bundling refers to applying the same Precoding Matrix Index (PMI) over a plurality of adjacent resource blocks during PDSCH transmission. User Equipment (UE) can assume the estimates are constant across the RBs within PRG bundle. Size of the PRG bundle depends on the system bandwidth and it can be fixed either in static or dynamic manner. For a static configuration, PRG bundle size is informed through initial Radio Resource Control (RRC) configuration whereas for dynamic configuration it is informed while allocating the downlink resources.

### SUMMARY

Aspects of the disclosure are as follows:
Described are implementations of a system and methods for PDCCH transmission. including a system and methods for mapping one or more CCEs for a UE to antenna elements based on the polarization of the antenna. Also described are implementations of a system and methods for distributing the power levels for transmission of CCEs for a UE to the antenna elements.

Described are implementations of a system and methods for PDSCH transmission, including one or more PRGs with a defined bundle size to antenna elements based on the polarization of the antenna. Also described is a system and methods for distributing power levels for one or more PRGs to the antenna elements.

An exemplary advantage of implementations as described herein include improved decoding at a wireless receiver side.

### BRIEF DESCRIPTION OF THE DRAWINGS

FIG. 1 shows multiple antenna transmission in a wireless system.
FIG. 2 shows signal transmission over horizontal and vertical polarization directions in parallel.
FIG. 3 shows mapping of multiple antenna elements over cross-polarized antenna elements.
FIG.4 shows a CORESET region and CCE definition for a PDCCH dimension of a Bandwidth of 10 MHz and 2 OFDM symbol duration.
FIG. 5 shows PRG Bundling in PDSCH transmission.
FIG. 6 shows PDCCH CCE mapping over antenna-elements.
FIG. 7 shows single layer to multiple antenna mapping.
FIG. 8A shows CCE mapping over antenna elements for PDCCH transmission.
FIG. 8B shows CCE mapping over antenna elements for PDCCH transmission.
FIG. 9A shows PRG mapping over antenna elements for PDSCH transmission.
FIG. 9B shows PRG mapping over antenna elements for PDSCH transmission.
FIG 10 is a block diagram of a system architecture.
FIG. 11 shows an example of a User Plane Stack.
FIG. 12 shows an example of a Control Plane Stack.
FIG. 13 shows an example of a Separation of CU-CP (CU-Control Plane) and CU-UP (CU-User Plane).
FIG. 14 shows an example of a Separation of CU-CP (CU-Control Plane) and CU-UP (CU-User Plane).
FIG. 15 shows a DL (Downlink) Layer 2 Structure.
FIG 16 shows an exemplary logical flow for implementing an RB allocation policy.
FIG. 17 shows an L2 Data Flow example.
FIG. 18 shows an example of an O-RAN architecture.
FIG. 19 describes an E-UTRAN architecture.
FIG. 20 describes an EN-DC architecture.

### DETAILED DESCRIPTION

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.
3GPP TS 23.501 V 18.1.0 2023-04-05
3GPP TS 38.300 V 17.4.0 03-28-2023
3GPP TS 38.401 V 17.4.0 2023-04-03
3GPP TS 38.425 17.3.0, 2023-04-03

### Acronyms

3GPP: Third generation partnership project
AL: Aggregation Level
BS: Base Station
CA: Carrier Aggregation
CC: Component Carrier
CCE: Control Channel Elements
C-RAN: cloud radio access network
CORESET: Control Resource Set
CU: Central unit
CQI: Channel Quality Indicator
CSA: Channel State Information
DL: Downlink
DCI: Downlink Control Information
DU: Distribution unit
EPC: Evolved Packet Core
eNB: evolved Node B
gNB: g NodeB
EN-DC
FAPI: Functional application platform interface
IoT: Internet of Things
L1: Layer 1
L2: Layer 2
L3: Layer 3
RLC: Radio Link Control
RRC: Radio Resource Control
RU: Radio Unit
U-plane: User plane
UPF: User Plane Function
UE: user equipment
UL: uplink
MIMO: multiple-in multiple-out
MU-MIMO: multiple-in multiple-out
MME: Mobility Management Entity
MR-DC: Multi-Radio Dual Connectivity
NB: Narrowband
NR: New Radio
NR-U: New Radio - User Plane
OFDM: orthogonal frequency-division multiplexing
O-RAN: Open Radio Access Network
PDB: Packet Delay Budget
QCI: QoS Class Identifier
QFI: QoS Flow Id
QoS : Quality of Service
PDCP : Packet Data Convergence Protocol
PDCCH: Physical Downlink Control Channel
PDSCH: Physical Downlink Shared Channel
PDU: Protocol Data Unit
PMI: Precoding matrix indicator
PUCCH: Physical Uplink Control Channel
PUSCH: Physical Uplink Shared Channel
PRB: Physical Resource Block
PDCP: Packet Data Convergence Protocol
RLC: Ratio Link Control
MAC: Medium Access Control
PHY: Physical Layer
PRG: Physical Resource block Group
RAT: Radio Access Technology
RB: Resource Block
RI: Rank Indicator
RLC: Radio Link Control
RU: Radio Unit
RMM: Radio resource management
SN: Signal Node
SR: Scheduling Request
SIB2: System Information Block Type 2
S-GW: Serving Gateway
TTI: Transmission Time Interval

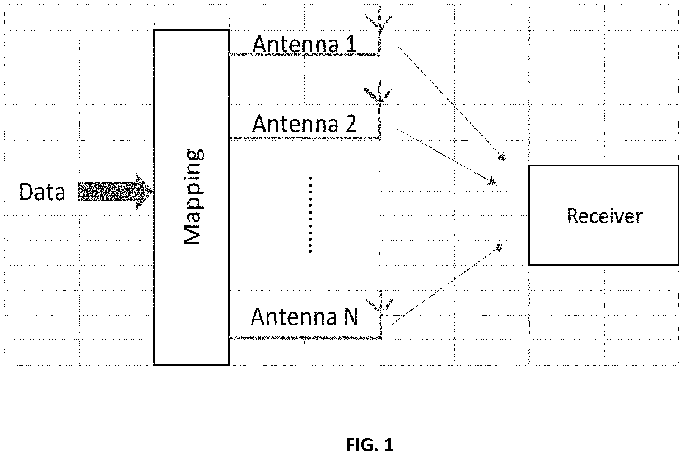

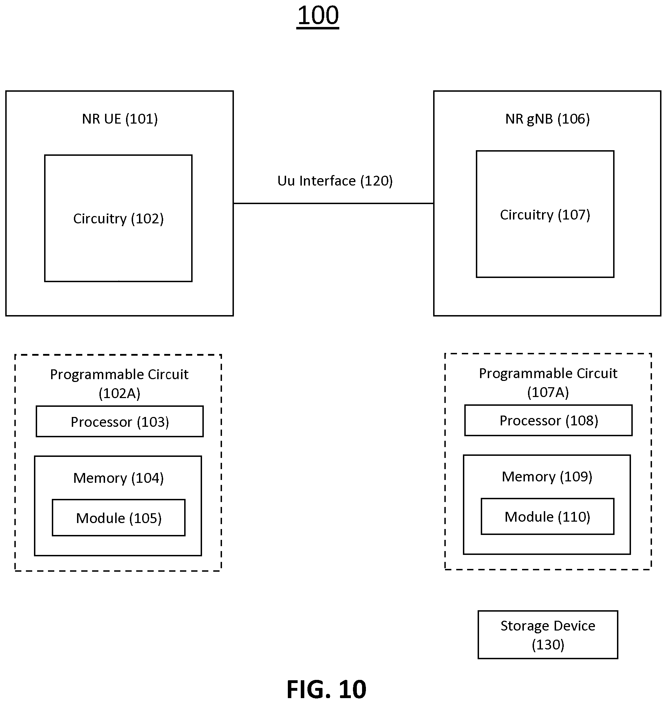

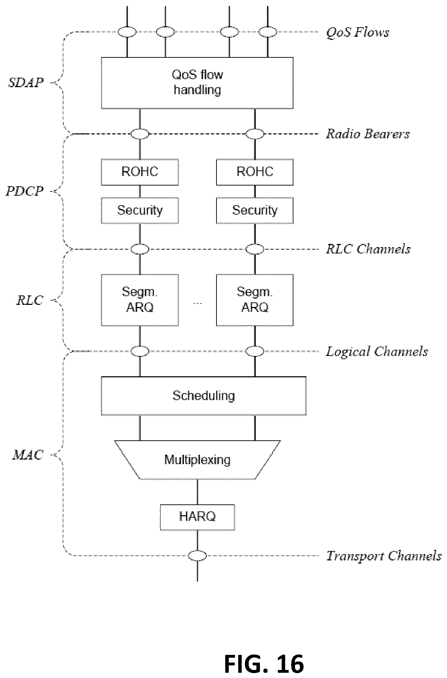

FIG. 1 shows multiple antenna transmission in a wireless system such as the exemplary systems shown in FIGS. 10-20. As shown in FIG. 1, transmission of data can be mapped to one or more antennas to enhance the overall system performance. Wireless communication systems are widely deployed to provide a variety of communication services such as for voice, data transmission and so on. The need for an increase in data rate transmission is growing rapidly. One of the ways this is accomplished is by adopting multiple antennas in wireless systems. Thes multiple antennas are used for sending and receiving data signals over radio channels. As also shown in FIG. 1, the same or different signals belonging to one or many users can be transmitted simultaneously over multiple antenna elements A1, A2 ...AN. In addition to achieving higher data rates, multiple antenna transmission techniques can provide robust transmission over multipath fading channels. The number of antennas in a wireless system depends on implementation complexity, and the distance between the antenna elements depends on the operating frequency.

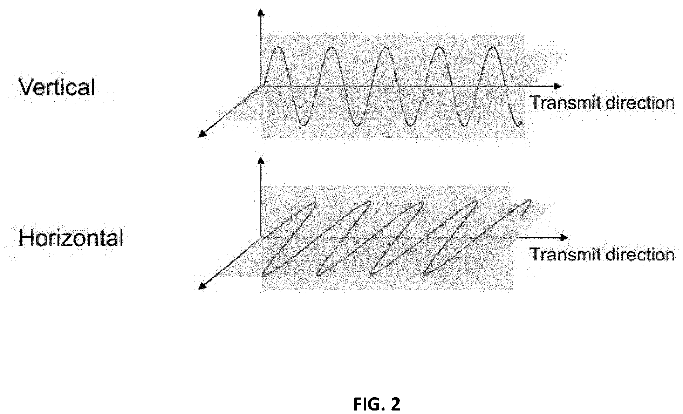

FIG. 2 shows signal transmission over horizontal and vertical polarization directions in parallel. Radio signals can be transmitted with more than one polarization by exploiting the property of signal transmission over different angular spreads. It is possible to have more than one rank transmission by sending data over cross polarized elements of the transmission antennas. For example, signal mapping can be done using +45 degree polarized antenna elements on one set and -45 degree polarized antenna elements on another set, where both sets are in the same single panel antenna structure. This can be done using polarized antenna elements. As shown in FIG. 2, transmission can be done in both vertical and horizontal polarization direction in parallel.

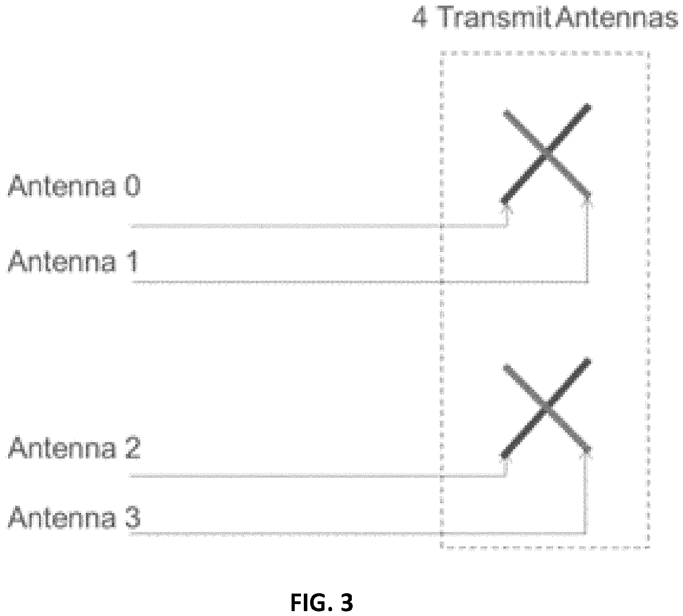

FIG. 3 shows mapping of multiple antenna elements over cross-polarized antenna elements. In particular, FIG. 3 shows an example of data signal mapping over 4 transmit antennas arranged in a cross-polarized panel. Antenna elements are equally distributed across the vertical and horizontal polarization directions. Transmit signals from the same polarization antenna can have destructive interference due to same angular spread. This can degrade the system performance for some channel conditions.

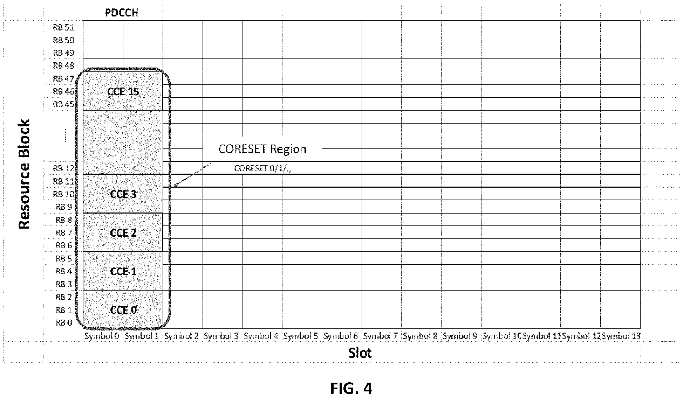

As explained herein, PDCCH transmission in a 5G NR system is used to carry DCI for transmitting PDSCH, PUSCH, and MAC level information for a single or group of UEs. PDCCH transmission in 5G NR is designed in the form of CORESET based transmission. CORESET defines the control region in a slot in terms of OFDM symbols and RBs. CCEs in a CORESET are allocated to UEs in an interleaved or non-interleaved form. Aggregation Level (AL) is quantified in terms of number of CCEs that it occupies. A number of CCEs in PDCCH CORESET depends on the dimension of CORESET. FIG. 4 shows an example of PDCCH CCEs distribution based on non-interleaved pattern for 10 MHz system and two OFDM symbol duration. Each CCE occupies 6 RBs in frequency domain for a PDCCH length of 1 OFDM symbol.

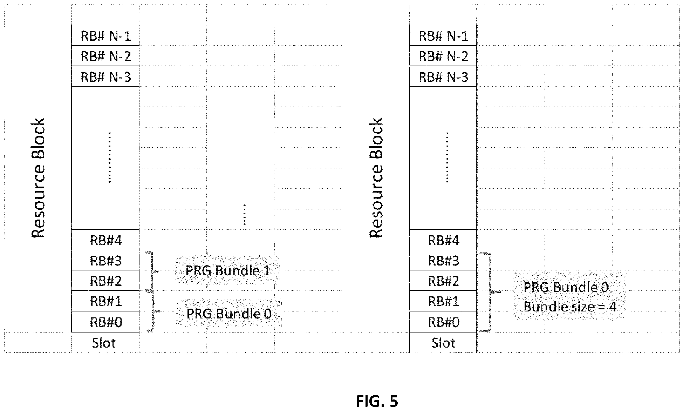

As also explained herein, PRG bundling refers to applying the same PMI over a plurality of adjacent resource blocks during PDSCH transmission. UE can assume the estimates are constant across the RBs in a PRG bundle. Size of the PRG bundle depends on the system bandwidth and it can be fixed either in static or dynamic manner. For a static configuration, PRG bundle size is informed through initial Radio RRC configuration whereas for dynamic configuration it is informed while allocating the Downlink resources. FIG. 5 shows PRG bundling with bundle size of 2 RB and 4 RB for PDSCH transmission.

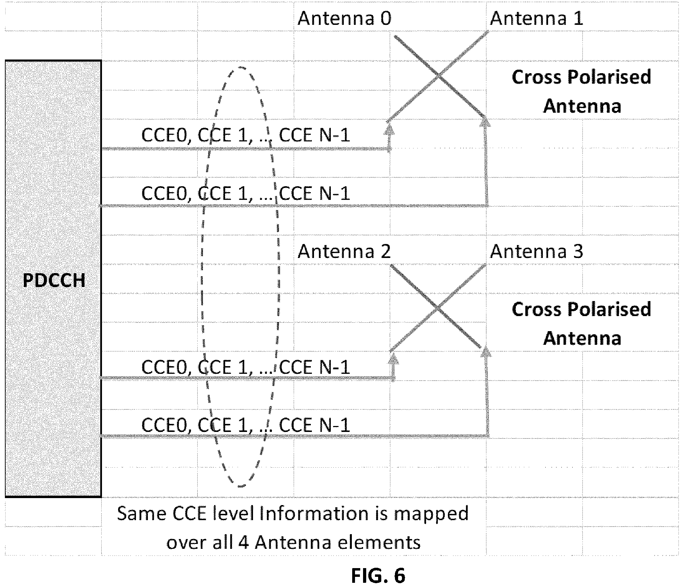

FIG. 6 shows a PDCCH CCE mapping over antenna elements in an existing design. All CCEs are transmitted over an antenna element with equal transmit power levels. Based on the existing design, PDCCH CCEs are mapped over multiple antennas with equal power on all antenna elements. PDCCH signal mapping over antenna elements does not consider the polarization of the antennas. For example, as shown in FIG. 6, PDCCH transmission of 'N' CCEs for a UE is mapped on 4 transmission antennas (2 cross polarized pairs) with equal power on all antenna elements.

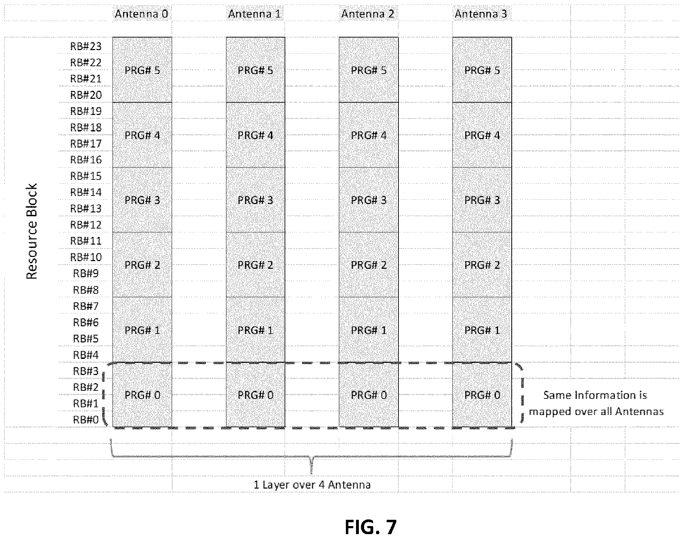

FIG. 7 shows conventional mapping of PRGs associated with single layer to multiple antenna elements. As shown in FIG. 7, all PRGs are transmitted over each antenna element with equal transmit power levels. For a PDSCH transmission, mapping of one layer to multiple antenna elements is done by distributing power equally over all the antenna elements and does not consider antenna polarization into account. In the example of FIG. 7, one layer transmission data is replicated over multiple antennas with PRG size of 4 RBs for PDSCH transmission. This can impact the decoding performance at the receiver side due to interference between antenna elements in some channel conditions.

The present disclosure provides implementations to improve the link reliability for PDCCH and PDSCH transmission in a 5G NR system.

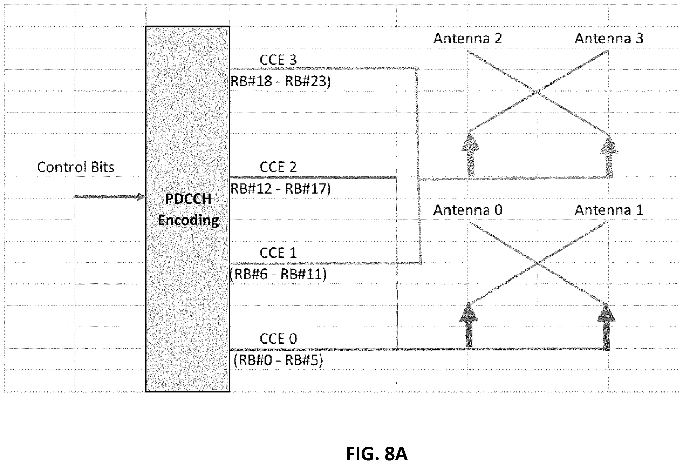

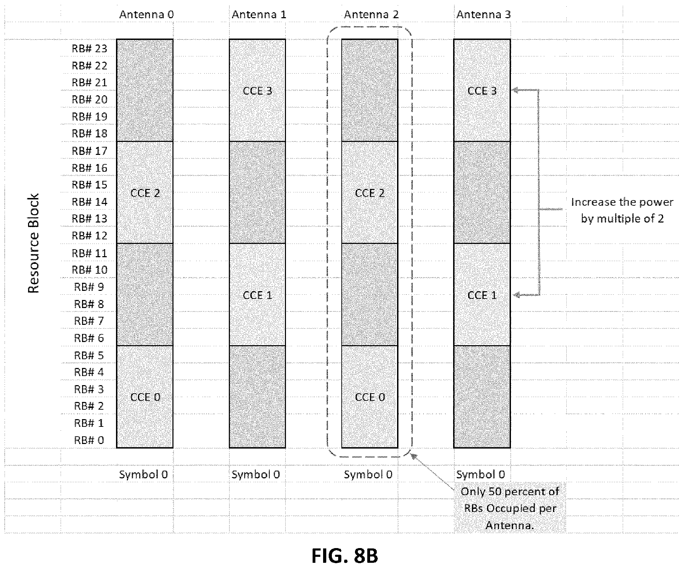

In an implementation, FIG. 8A and FIG. 8B show CCE mapping over antenna elements for PDCCH transmission. As shown in FIG. 8B, only 50% of the RBs are occupied per antenna element. The transmit power per Antenna element can thus be increased to two times. This adds 3 dB gain at the receiver side.

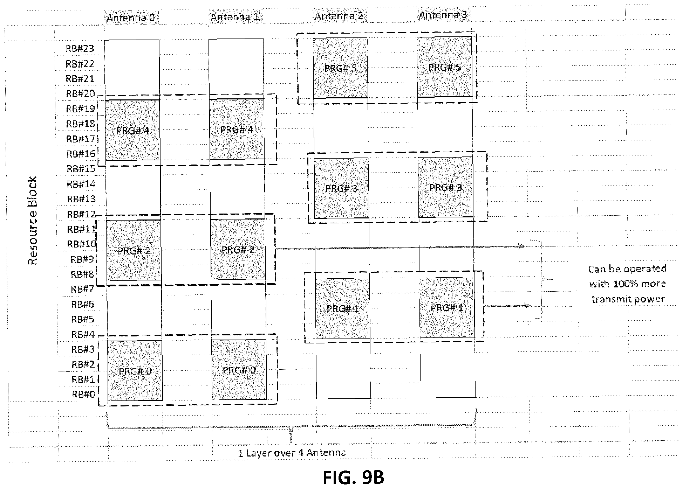

In an implementation, FIG .9A and FIG. 9B show PRG mapping over antenna elements for PDSCH transmission. As shown in FIG. 9B, only 50% of the RBs are occupied in per antenna element. The transmit power per antenna element can thus be increased to two times. This also adds a 3 dB gain at the receiver side for the better decoding of signals.

As noted above, in data signal mapping over transmit antennas arranged in a cross-polarized panel, transmit signals from the same polarization antenna can have destructive interference due to same angular spread. This can degrade the system performance for some channel conditions. To address this, the present disclosure provides implementations for PDCCH and PDSCH transmission in 5G NR system.

Described herein are implementations for the distribution of power levels to the lowest possible granularity of RBs for PDCCH and PDSCH transmission over the antenna elements. Implementations as described herein can improve the overall link budget for achieving better signal reception at the receiver.

Implementations as described herein can minimize the interference at the receiver side, thereby improving the probability of decoding signals at the receiver side.

The present disclosure shows systems and methods for improving the detectability of downlink (DL) transmission by effective mapping of RBs and allocating power levels over antenna elements in a wireless transmitter system, which increases the probability of decoding the data at the receiver side.

### For PDCCH Transmission:

Described is a system and method for mapping of CCEs in PDCCH transmission over multiple antenna elements in a wireless communication system.

CCEs are distributed over antenna elements based on two factors. First, CCE distribution can be based on polarisation of antenna elements. Instead of mapping PDCCH CCEs over all antenna elements, PDCCH CCEs are mapped to only one set of cross polarized antenna elements, which minimizes the interference across the antenna elements with same polarization. Second, CCE distribution is based on an increase in per transmit antenna power level for a PDCCH transmission. CCEs are partially mapped to each antenna element which reduces the number of occupied REs in each antenna element, hence the transmit power of CCEs can be increased proportionately by utilizing the power from REs from unused CCE positions.

For example, in 5 MHz wireless transmission system, a maximum of 4 PDCCH CCEs can be accommodated with single OFDM symbol duration. These 4 CCEs are equally mapped against the 2 cross polarised antenna elements. As shown in FIG 8A, CCE 0 and CCE 1 are mapped over Antenna 0 and Antenna 1 and CCE 2 and CCE 3 are mapped over Antenna 2 and Antenna 3.

Since CCE 2 and CCE 3 are not mapped over Antenna 0 and Antenna 1, the power levels on those RBs can be used to increase the power levels on the REs on CCE 0 and CCE 1.

Based on the CCE mapping, RB level CCE distribution are shown in FIG. 8B. As shown in FIG. 8B, the transmit power level of CCE 0 and CCE 1 can be increased to two times due to the empty RB positions in the same antenna elements. This increases the path loss by 3dB at the receiver side.

The lowest granularity of mapping and power distribution across the antenna elements is considered as per PDCCH CCE.

### For PDSCH Transmission:

Described is a system and method for PDSCH transmission over multiple antenna elements at PRG level in a wireless system.

PRGs are distributed over antennal elements based on two factors. First, PDSCH PRG distribution is based on polarization of the antenna elements. Instead of mapping PDSCH PRGs over all antenna elements, it is mapped only to one set of cross polarised antenna elements, which minimizes the interference across the antenna elements with same polarization. Second, PRG distribution is based on an increase in per-antenna transmit power level for a PDSCH transmission from a wireless transmitter. PRGs are partially mapped to each antenna element, which reduces a number of occupied REs in each antenna element. The transmit power of PRGs can thereby be increased proportionately by utilizing the power from REs from unused PRG positions.

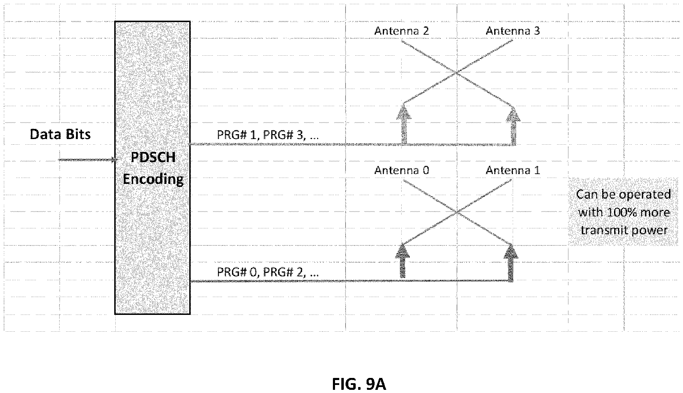

For example, as shown in FIG. 9A, an odd number of PRGs associated with one user PDSCH allocation is mapped to one set of cross polarized antennas and an even number of PRGs with the same user PDSCH allocation is mapped to another set of cross polarized antennas.

FIG. 9B shows PRG mapping over each antenna element. As shown in FIG. 9B, only 50 % of RBs are occupied per antenna element. Hence transmit power can be increased by 2 times.

The following methods can be used for implementations described herein.

### Through IQ samples in Front-Haul (FH) interface

In an open-RAN interface, DU and RU communicates through a FH interface. The CCE / PRG to antenna element mapping in the RU can be checked by capturing the IQ data samples in the FH interface. IQ samples can be further analyzed by Wireshark or equivalent tools to understand the value of each sample.

### Through data Samples at the UE side

Embodiments can be implemented analyzing the data samples at the UE side using QXDM or equivalent analysis tools to determine data mapping patterns and transmission power levels over antenna elements for CCE and PDSCH transmission.

### Through L1-L2 Interface

Embodiments can be implemented by analyzing the encoding pattern of the PDCCH / PDSCH transmission message from L2. This can be done by analyzing FAPI messages in Wireshark or equivalent tools.

Referring now to FIGS. 10-20, in which example architectures of a system and network according to various embodiments, is illustrated. The following description is provided for an example system that operates in conjunction with the LTE system standards and 5G or NR system standards as provided by 3GPP technical specifications. However, the example embodiments are not limited in this regard and the described embodiments can apply to other networks that benefit from the principles described herein, such as future 3GPP systems (e.g., Sixth Generation (6G)) systems, IEEE 802.16 protocols (e.g., WMAN, WiMAX, etc.), or the like.

FIG. 10 is a block diagram of a system 100 for implementations as described herein. System 100 includes a NR UE 101, a NR gNB 106. The NR UE and NR gNB are communicatively coupled via a Uu interface 120.

NR UE 101 includes electronic circuitry, namely circuitry 102, that performs operations on behalf of NR UE 101 to execute methods described herein. Circuity 102 can be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 contains instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

While modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout wireless communication network, and each UE may be stationary or mobile. A UE includes: an access terminal, a terminal, a mobile station, a subscriber unit, a station, and the like. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewellery (e.g., a smart ring, a smart bracelet, and the like), an entertainment device (e.g., a music device, a video device, a satellite radio, and the like), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network (e.g., an LTE network) can be a narrowband bandwidth UE. As used herein, devices with limited communication resources, e.g. smaller bandwidth, are considered as narrowband UEs. Similarly, legacy devices, such as legacy and/or advanced UEs (e.g., in LTE) can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN may be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which may be referred to as a CRAN and/or a vBBU. In these embodiments, the CRAN or vBBU can implement a RAN function split, such as a PDCP split in which RRC and PDCP layers are operated by the CRAN/vBBU and other L2 protocol entities are operated by individual RAN nodes; a MAC/PHY split wherein RRC, PDCP, RLC, and MAC layers are operated by the CRAN/vBBU and the PHY layer is operated by individual RAN nodes; or a "lower PHY" split in which RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU via individual F1 interfaces. In these implementations, the gNB-DUs can include one or more remote radio heads (RRH), and the gNB-CU may be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and may be similar to eNBs in an 3GPP architecture.

In some implementations, access to a wireless interface can be scheduled, wherein a scheduling entity (e.g.: BS, gNB, and the like) allocates bandwidth resources for devices and equipment within its service area or cell. As scheduling entity can be configured to schedule, assign, reconfigure, and release resources for one or more subordinate entities. In some examples, a UE 101 (or other device) may function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities may communicate utilizing the scheduled resources.

BS or gNB can be equipped with T antennas and UE 101 can be equipped with R antennas, where in general T≥1 and R≥1. At BS, a transmit processor is configured to receive data from a data source for one or more UEs 101 and select one or more modulation and coding schemes (MCS) for each UE based on channel quality indicators (CQIs) received from the UE 101. The BS is configured to process (e.g., encode and modulate) the data for each UE 101 based on the MCS(s) selected for the UE 101, and provide data symbols for all UEs. A transmit processor is also configured to process system information (e.g., for static resource partitioning information (SRPI), and the like) and control information (e.g., CQI requests, grants, upper layer signaling, and the like) and can provide overhead symbols and control symbols. Processor 108 can also generate reference symbols for reference signals (e.g., the cell-specific reference signal (CRS)) and synchronization signals (e.g., the primary synchronization signal (PSS) and the secondary synchronization signal (SSS)). A transmit (TX) multiple-input multiple-output (MIMO) processor can be configured perform spatial processing (e.g., precoding) on the data symbols, the control symbols, the overhead symbols, and/or the reference symbols, if applicable, and can be configured to provide T output symbol streams to T modulators (MODs). Each modulator can be configured to process a respective output symbol stream (e.g., for OFDM, and the like) to obtain an output sample stream. Each modulator can further be configured to process (e.g., convert to analog, amplify, filter, and upconvert) the output sample stream to obtain a downlink signal. T downlink signals from modulators can be transmitted via T antennas.

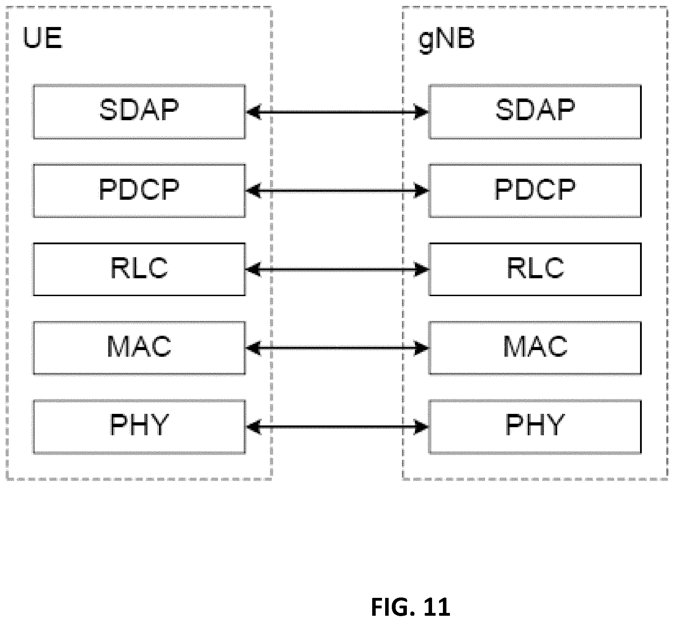

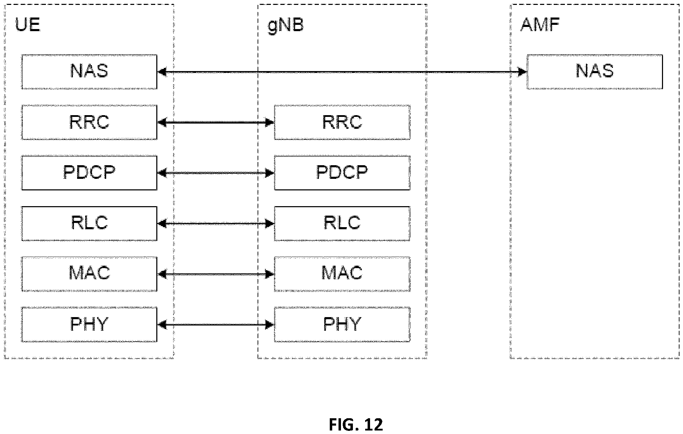

An overview of 5G NR Stacks is as follows. 5G NR (New Radio) user and control plane functions with monolithic gNB (gNodeB) are shown in the figures below. For the user plane, PHY (physical), MAC (Medium Access Control), RLC (Radio Link Control), PDCP (Packet Data Convergence Protocol) and SDAP (Service Data Adaptation Protocol) sublayers are terminated in the gNB on the network side. For the control plane, RRC (Radio Resource Control), PDCP, RLC, MAC and PHY sublayers are terminated in the gNB on the network side and NAS (Non-Access Stratum) is terminated in the AMF (Access Mobility Function) on the network side. FIG. 11 shows an example of a User Plane Stack as descried in 3GPP TS 38.300. FIG. 12 shows an example of a Control Plane Stack as described in 3GPP TS 38.300.

An NG-RAN (NG-Radio Access Network) architecture from 3GPP TS 38.401 is described below. F1 is the interface between gNB-CU (gNB - Centralized Unit) and gNB-DU (gNB - Distributed Unit), NG is the interface between gNB-CU (or gNB) and 5GC (5G Core), E1 is the interface between CU-CP (CU-Control Plane) and CU-UP (CU-User Plane), and Xn is interface between gNBs.

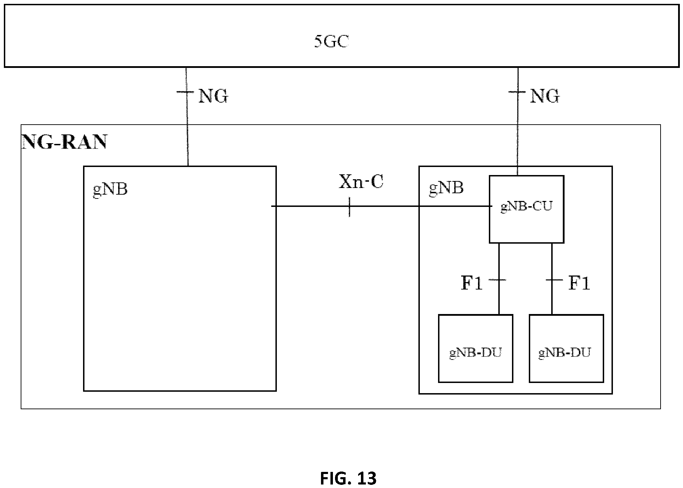

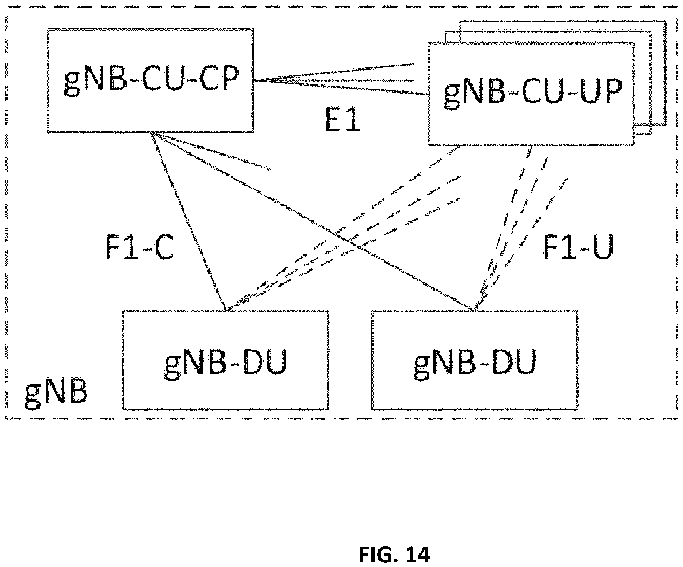

A gNB can have a gNB-CU-CP, multiple gNB-CU-UPs and multiple gNB-DUs. The gNB-CU-CP is connected to the gNB-DU through the F1-C interface and to the gNB-CU-UP through the E1 interface. The gNB-CU-UP is connected to the gNB-DU through the F1-U interface and to the gNB-CU-CP through the E1 interface. One gNB-DU is connected to only one gNB-CU-CP and one gNB-CU-UP is connected to only one gNB-CU-CP. FIG. 13 shows an example of an NG-RAN Architecture as described in 3GPP TS 38.501. FIG. 14 shows an example of a Separation of CU-CP (CU-Control Plane) and CU-UP (CU-User Plane) as described in 3GPP TS 38.401.

A Layer 2 (L2) of 5G NR is split into the following sublayers is described in 3GPP TS 38.300):
∘ Medium Access Control (MAC): The MAC sublayer offers Logical Channels (LCs) to the RLC sublayer. This layer runs a MAC scheduler to schedule radio resources across different LCs (and their associated radio bearers).
∘ Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.
∘ Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane.
∘ Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

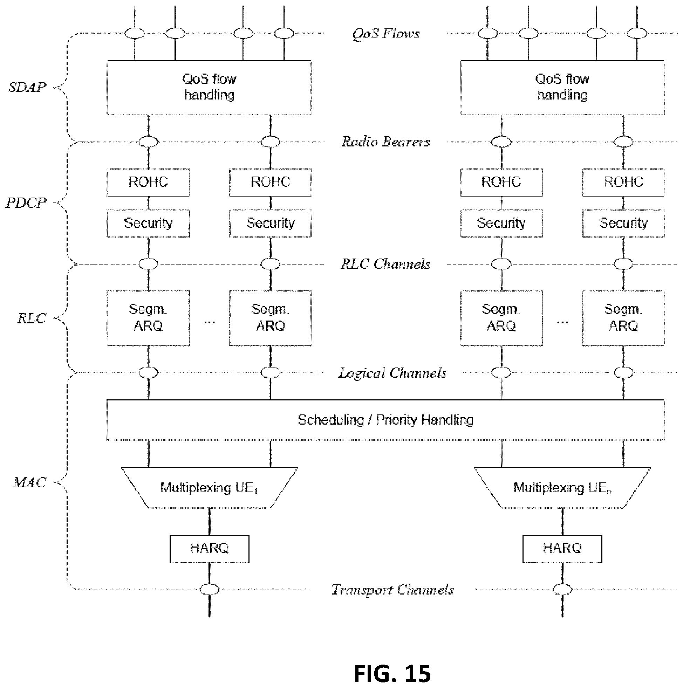

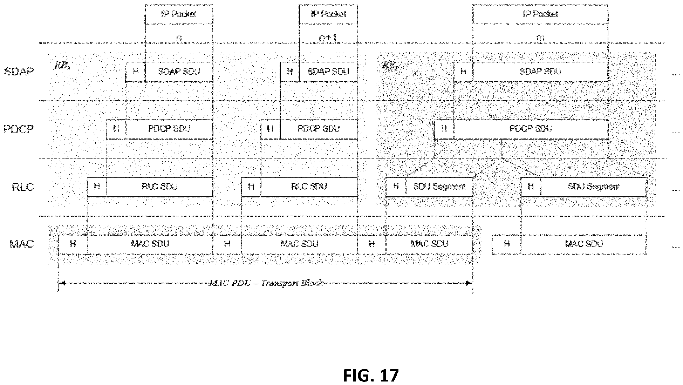

FIG. 15 shows a DL (Downlink) Layer 2 Structure as described in 3GPP TS 38.300. FIG. 11 shows an UL (uplink) Layer 2 Structure in accord with 3GPP TS38.300. FIG. 17 shows an L2 Data Flow example in accord with 3GPP TS 38.300 [H denotes headers or subheaders in FIG. 17].

O-RAN, which is based on disaggregated components and connected through open and standardized interfaces, is based on 3GPP NG-RAN. An overview of O-RAN with disaggregated RAN (CU, DU, and RU), near-real-time RIC and non-real-time RIC is shown in the figure below. Here, DU (Distributed Unit) and CU (Centralized Unit) are typically implemented using COTS (Commercial off-the-shelf) hardware.

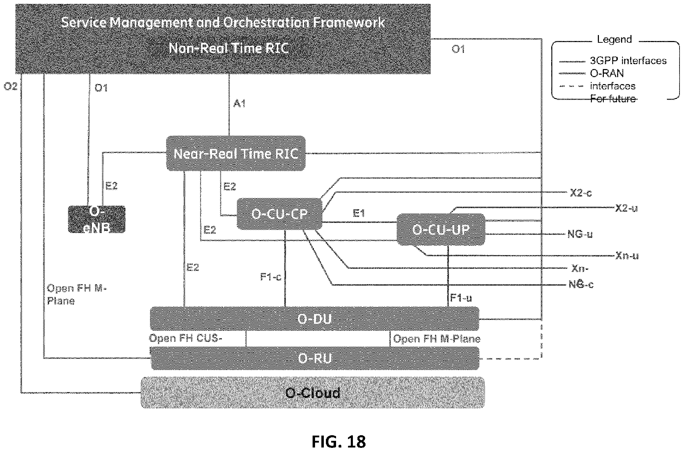

FIG. 18 shows an example of an O-RAN architecture. As in FIG. 18, the CU and the DU are connected using the F1 interface (with F1-C for control plane and F1-U for user plane traffic) over the midhaul (MH) path. One DU could host multiple cells (for example, one DU could host 24 cells) and each cell may support many users. For example, one cell can support 600 RRC Connected users and out of these 600, there may be 200 Active users (i.e., users which have data to send at a given point of time).

A cell site could have multiple sectors and each sector can support multiple cells. For example, one site could consist of three sectors and each sector could support 8 cells (with 8 cells in each sector on different frequency bands). One CU-CP could support multiple DUs and thus multiple cells. For example, a CU-CP could support 1000 cells and around 100,000 UEs. Each UE could support multiple DRBs and there could be multiple instances of CU-UP to serve these DRBs. For example, each UE could support 4 DRBs, and 400,000 DRBs (corresponding to 100,000 UEs) may be served by five CU-UP instances (and one CU-CP instance).

DU could be located in a private data center or it could be located at a cell-site too. CU could also be located in a private data center or even hosted on a public cloud system. DU and CU could be tens of kilometers away. CU could communicate with 5G core system which could also be hosted in the same public cloud system (or could be hosted by a different cloud provider). RU (Radio Unit) is located at cell-site and communicated with DU via a fronthaul (FH) interface.

The E2 nodes (CU and DU) are connected to the near-real-time RIC using the E2 interface. The E2 interface is used to send data (e.g., user, cell, slice KPMs) from the RAN, and deploy control actions and policies to the RAN at near-real-time RIC. The application or service at the near-real-time RIC that deploys the control actions and policies to the RAN are called xApps. The near-real-time RIC is connected to the non-real-time RIC using the A1 interface.

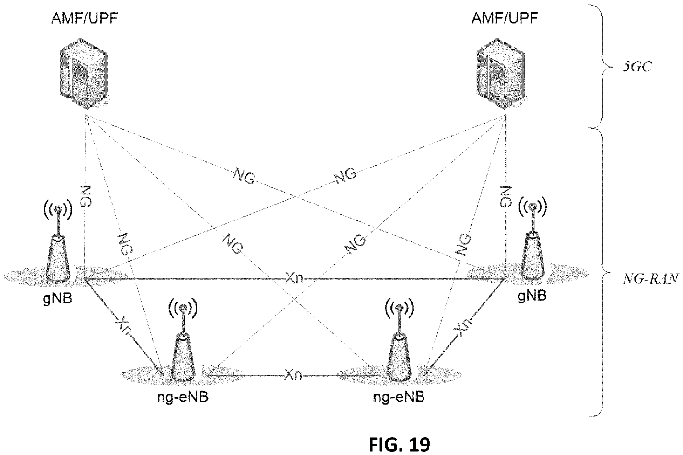

An E-UTRAN architecture is illustrated in FIG. 19. The E-UTRAN comprises eNBs, providing the E-UTRA U-plane (PDCP/RLC/MAC/PHY) and control plane (RRC) protocol terminations towards the UE. The eNBs are interconnected with each other by the X2 interface. The eNBs are also connected by the S1 interface to the EPC (Evolved Packet Core), more specifically to the MME (Mobility Management Entity) by the S1-MME interface and to the Serving Gateway (S-GW) by the S1-U interface. The S1 interface supports a many-to-many relation between MMEs/Serving Gateways and eNBs.

E-UTRAN also supports MR-DC via E-UTRA-NR Dual Connectivity (EN-DC), in which a UE is connected to one eNB that acts as a MN and one en-gNB that acts as a SN. An EN-DC architecture is illustrated in FIG. 10C. The eNB is connected to the EPC via the S1 interface and to the en-gNB via the X2 interface. The en-gNB might also be connected to the EPC via the S1-U interface and other en-gNBs via the X2-U interface. In EN-DC, an en-gNB comprises gNB-CU and gNB-DU(s).

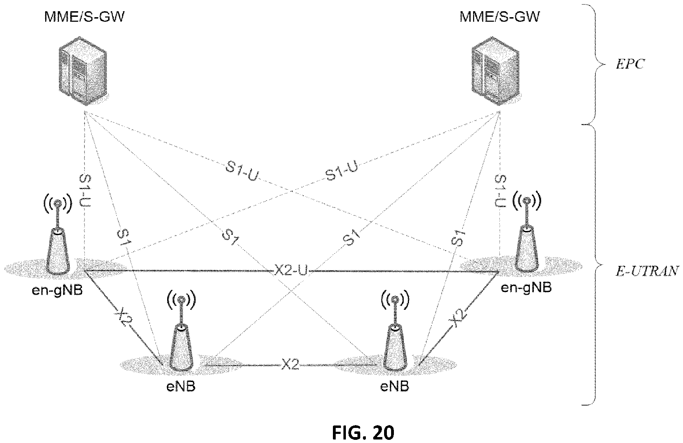

E-UTRAN also supports and NG-RAN architecture. An NG-RAN architecture is illustrated in FIG. 20. An NG-RAN node is either:
a gNB, providing NR user plane and control plane protocol terminations towards the UE; or
an ng-eNB, providing E-UTRA user plane and control plane protocol terminations towards the UE. (3GPP TS 38.300 17.3.0.)

As shown in FIGS. 19-20, the gNBs and ng-eNBs are interconnected with each other by the Xn interface. The gNBs and ng-eNBs are also connected by the NG interfaces to the 5GC, more specifically to the AMF (Access and Mobility Management Function) by the NG-C interface and to the UPF (User Plane Function) by the NG-U interface. The gNB and ng-eNB host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity. Tight interworking between NR and E-UTRA. NB-IoT UE is supported by ng-eNB.

The gNB and ng-eNB host functions such as functions for Radio Resource Management: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity; and Tight interworking between NR and E-UTRA. NB-IoT UE is supported by ng-eNB.

In an example, control information (e.g., scheduling information) may be provided for broadcast and/or multicast operation. The UE can monitor different bundle sizes for the control channel depending on the maximum number of repetitions.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the disclosure.

## Claims

1. A system comprising
a BU comprising:
a plurality of antennas for transmitting data and control bits and configured to communicate with User Equipment (UE);
a wireless transmitter module configured to map Resource Blocks (RB) over a subset of cross polarized antennas elements of the plurality of antennas for Physical Downlink Control Channel (PDCCH) and Physical Downlink Shared Channel (PDSCH) transmission, the wireless transmitter module being configured to allocate power levels to the RBs over the subset of cross polarized antennas elements for the PDCCH or PDSCH transmission.

2. The system of claim 1, wherein the wireless transmitter module is configured to group the RBs in control channel elements (CCEs) and selectively map the CCEs to one or more of the cross polarized antenna elements from the subset.

3. The system of claim 2, wherein the system is configured to adjust the transmission power of the CCEs for the PDCCH transmission or PDSCH transmission by using power from unused CCE positions on the antennas.

4. The system of claim 1, wherein the wireless transmitter module is configured to group the RBs in Physical Resource Block Groups (PRGs) and selectively map the PRGs to one or more set of cross polarized antenna elements from the plurality of antennas to minimize the overall interference across the cross polarized antenna elements with the same polarization.

5. The system of claim 4, wherein the wireless transmitter module is configured to increase the transmission power of the PRGs based on the RBs corresponding to unused PRG positions in each of the antennas and limited to a maximum transmit power in each of the antennas.

6. The system of claim 4, wherein the system is configured to map CCEs for the PDCCH transmission or the PDSCH transmission to only one set of cross polarized antenna elements.

7. The system of claim 6, wherein the system is configured to partially map the CCEs to each antenna element to reduce the number of occupied REs in each antenna element so that the transmission power of the CCEs can be increased proportionately by utilizing the power from the REs from the unused CCE positions on the antennas.

8. The system of claim 1, further comprising Open-RAN interface including a Distributed Unit (DU) and a Radio Unit (RU) configured to communicate through a fronthaul (FH) interface, and the system is configured to check CCE antenna element mapping in the RU by capturing IQ data samples in the FH interface.

9. A method comprising
mapping, with a wireless transmittal module, Resource Blocks (RB) over a subset of cross polarized antennas elements of a plurality of antennas for transmitting data and control bits and configured to communicate with User Equipment (UE) for Physical Downlink Control Channel (PDCCH) and Physical Downlink Shared Channel (PDSCH) transmission; and
allocating power levels to the RBs over the subset of cross polarized antennas elements for the PDCCH or PDSCH transmission.

10. The method claim 9, further comprising:
grouping the RBs in control channel elements (CCEs) and selectively map the CCEs to one or more of the cross polarized antenna elements from the subset with the wireless transmitter module.

11. The method of claim 10, further comprising:
adjusting the transmission power of the CCEs for the PDCCH transmission or PDSCH transmission by using power from unused CCE positions on the antennas.

12. The method of claim 9, further comprising:
grouping the RBs in Physical Resource Block Groups (PRGs) and selectively map the PRGs to one or more set of cross polarized antenna elements from the plurality of antennas with the wireless transmitter module to group to minimize the overall interference across the cross polarized antenna elements with the same polarization.

13. The method of claim 12, further comprising:
increasing the transmission power of the PRGs based on the RBs corresponding to unused PRG positions in each of the antennas and limited to a maximum transmit power in each of the antennas with wireless transmittal module.

14. The method of claim 12, further comprising:
mapping the CCEs for the PDCCH transmission or the PDSCH transmission to only one set of cross polarized antenna elements.

15. The method of claim 14, further comprising:
partially mapping the CCEs to each antenna element to reduce the number of occupied REs in each antenna element so that the transmission power of the CCEs can be increased proportionately by utilizing the power from the REs from the unused CCE positions on the antennas.
